# EUROPÄISCHE PATENTSCHRIFT

(11) **EP 1 794 460 B1**
(45) Veröffentlichungstag und Bekanntmachung des Hinweises auf die Patenterteilung: **16.07.2008**
(21) Anmeldenummer: 05812877.8
(22) Anmeldetag: 30.09.2005
(51) Int. Cl.: F15B 15/24

(54) **VERSTELLBARE ANSCHLAGANORDNUNG FÜR EINE KOLBEN-ZYLINDER-EINHEIT**
ADJUSTABLE STOP ASSEMBLY FOR A PISTON-CYLINDER UNIT
ENSEMBLE BUTEE REGLABLE POUR UNE UNITE PISTON-CYLINDRE

(30) Priorität: 01.10.2004 DE 202004015412 U
(43) Veröffentlichungstag der Anmeldung: 13.06.2007
(73) Patentinhaber: Weiner, Uwe, 40217 Düsseldorf (DE); Schröter, Oliver, 45470 Mülheim an der Ruhr (DE)
(72) Erfinder: Weiner, Uwe, 40217 Düsseldorf (DE); Schröter, Oliver, 45470 Mülheim an der Ruhr (DE)
(74) Vertreter: Frank, Hartmut
(86) Internationale Anmeldenummer: PCT/DE2005/001753
(87) Internationale Veröffentlichungsnummer: WO 2006/037297

(56) Entgegenhaltungen:
- DE-U1- 8 437 887
- US-A- 3 079 187
- PATENT ABSTRACTS OF JAPAN Bd. 1995, Nr. 01, 28. Februar 1995 (1995-02-28) -& JP 06 280828 A (FUJI OOZX INC), 7. Oktober 1994 (1994-10-07)

## Beschreibung

Die Erfindung betrifft eine zur Hubbegrenzung dienende, verstellbare Anschlaganordnung für eine Kolben-Zylinder-Einheit mit einem Zylinder und einem Kolben, der eine Kolbenstange aufweist, insbesondere zur Hubbegrenzung einer Hebevorrichtung an einem Gabelstapler, mit einem auf der Kolbenstange axial verschiebbaren und klemmend festlegbaren Klemmring, der in einem Bereich seines Außenumfangs einen Gewindeabschnitt aufweist, und mit einem auf dem Gewindeabschnitt des Klemmrings schraubbaren Gewindering, dessen dem Zylinder zugewandter Stirnrand als Anschlag an dem Zylinder dient.

Insbesondere für Gabelstapler sind verschiedene Hebevorrichtungen bekannt, mittels derer die Lasten tragenden Gabeln anhebbar bzw. absenkbar sind und die beispielsweise mehrfach ausziehbare Tragmasten aufweisen. Diese teleskopartig auszieh- bzw. einfahrbaren Tragmasten, die entweder Profilträger oder Kolben-Zylinder-Einheiten aufweisen, arbeiten im Wesentlichen durch Beaufschlagung mit einem Druckmittel, wobei die Gabeln in bekannter Weise mittels einer Kettenanordnung betätigt werden. Die Höhe der aufstapelbaren Lasten ist jeweils abhängig von der Gabelstaplerbauart. Die unterste Gabelposition ist im Wesentlichen so ausgelegt, dass die Unterseiten der Gabeln bereits auf dem ebenen Erdboden aufliegen können, bzw. aufliegend bewegt werden können.

So kommt es in der Praxis häufig vor, dass beispielsweise aufgrund der Abnutzung des Reifenprofils der Gabelstaplerreifen, die Gabeln soweit nach unten abgesenkt sind, dass entweder Abschnitte der Unterseite der Gabeln oder die komplette Unterseite der Gabeln während des Fahrens des Gabelstaplers auf dem Boden schleifen. Dies hat zur Folge, dass nicht nur der Boden, auf dem die Gabeln schleifen, beschädigt wird, sondern dass mit der Zeit auch die Gabeln selbst abgenutzt bzw. beschädigt werden und der gesamte Hubbegrenzungsmechanismus durch die Stoßeinwirkung negativ beeinträchtigt oder beschädigt wird. In einem solchen Fall müssen die verschlissenen Gabeln ersetzt werden, was unter Umständen recht teuer ist.

Um dies zu vermeiden, ist es vorteilhaft, eine Anordnung zum Einstellen der untersten Gabelposition vorzusehen. Zu diesem Zweck ist beispielsweise in dem Gebrauchsmuster G-U-84 37 887 eine zur Hubbegrenzung dienende, verstellbare Anschlaganordnung für eine Kolben-Zylinder-Einheit vorgeschlagen, die einen an einer Kolbenstange axial verschiebbaren und klemmend festlegbaren Klemmring, der in einem Bereich seines Außenumfangs einen Gewindeabschnitt aufweist, und einen auf dem Gewindeabschnitt des Klemmrings schraubbaren Gewindering aufweist, dessen dem Zylinder zugewandter Stirnrand als Anschlag an dem Zylinder dient. Durch Verstellen (Schrauben) des Gewinderings relativ zu dem Klemmring, kann der untere Stirnrand, der als Anschlag an dem Zylinder der Kolben-Zylinder-Einheit dient, auf relativ einfache Weise eingestellt werden.

Ein handelsüblicher Gabelstapler mit einer eine Kolben-Zylinder-Einheit aufweisenden Hebevorrichtung kann beispielsweise mit einer derartigen verstellbaren Anschlaganordnung nachgerüstet werden. Hierzu muss die Hebevorrichtung soweit demontiert werden, dass die Kolbenstange aus dem entsprechenden Zylinder ausgebaut und freigelegt ist, damit zunächst der Klemmring auf die Kolbenstange aufgeschoben und anschließend an der Kolbestange klemmbefestigt werden kann. Dann wird der Gewindering auf die Kolbenstange aufgeschoben und auf den Außengewindeabschnitt des Klemmrings aufgeschraubt, bevor die Hebevorrichtung wieder montiert werden kann. Das Nachrüsten einer Kolben-Zylinder-Einheit eines Gabelstaplers mit einer zur Hubbegrenzung dienenden, verstellbaren Anschlaganordnung gemäß diesem Stand der Technik erfordert aufgrund der Demontage/Montage der die Gabeln aufweisenden Hebevorrichtung viel Arbeitsausfallzeit, in der die Gabelstapler nicht benutzt werden können, wodurch das Nachrüsten insgesamt kostenintensiv ist.

Durch die Erfindung wird eine für eine Kolben-Zylinder-Einheit vorgesehene, zur Hubbegrenzung dienende, verstellbare Anschlaganordnung insbesondere zur Hubbegrenzung einer Hebevorrichtung an einem Gabelstapler geschaffen, die einfach und kostengünstig an Gabelstaplern nachgerüstet werden kann.

Gemäß der Erfindung ist eine zur Hubbegrenzung dienende verstellbare Anschlaganordnung für eine Kolben-Zylinder-Einheit, insbesondere zur Hubbegrenzung einer Hebevorrichtung an einem Gabelstapler, der eingangs genannten Art insbesondere dadurch gekennzeichnet, dass der Klemmring und der Gewindering jeweils in zwei Ringhälften diametral geteilt sind, wobei die beiden Ringhälften des Klemmrings mittels einer Verbindungsvorrichtung miteinander verbindbar und an der Kolbenstange festklemmbar sind, und die beiden Ringhälften des Gewinderings mittels einer Verbindungsvorrichtung derart miteinander verbindbar sind, dass der Gewindering auf die Gewindeabschnitte der Ringhälften des Klemmrings aufschraubbar ist.

Da sowohl der Klemmring als auch der auf diesen aufzuschraubende Gewindering jeweils in zwei Ringhälften diametral geteilt sind, die jeweils mittels einer geeigneten Verbindungsvorrichtung zu ihrer kompletten Ringgestalt miteinander verbindbar sind, muss die Hebevorrichtung zum Anbringen von Klemmring und Gewindering nicht demontiert werden. Vielmehr kann mit einfachen Handgriffen und zudem rasch zunächst der Klemmring an der an sich frei zugänglichen Kolbenstange befestigt werden, ohne die Kolbenstange aus dem zugehörigen Zylinder ausbauen zu müssen, indem die zwei Ringhälften jeweils an die Kolbenstange radial angesetzt und anschließend miteinander verbunden werden, wobei die Verbindungsvorrichtung dergestalt ist, dass der Klemmring an der Kolbenstange in der gewünschten Position festgeklemmt werden kann. Anschließend kann der Gewindering auf dieselbe Art und Weise um die Kolbenstange herum angebracht werden, wobei die Verbindungsvorrichtung zum Verbinden der beiden Ringhälften des Gewinderings derart ausgebildet sind, dass der dann komplettierte Gewindering mit seinem Innengewinde auf das Außengewinde des Klemmrings aufschraubbar ist.

Um einerseits den Klemmring an der Kolbenstange festklemmen und andererseits den Gewindering auf den Klemmring aufschrauben zu können, weisen zumindest die beiden einander zugeordneten zusammengesetzten Ringhälften des Klemmrings einen Klemmspalt auf, welcher beispielsweise dadurch gebildet sein kann, dass zumindest eine der beiden einander zugeordneten Ringhälften im Querschnitt einen Ringsektor beschreibt, der sich etwas weniger als 180° erstreckt. Um jedoch zu vermeiden, dass die zugehörigen Ringhälften als Paar einander zugeordnet werden müssen, weist vorzugsweise jede der Ringhälften einen Sektor von etwas weniger als 180° auf. Da es sich bei der Kolben-Zylinder-Einheit eines handelsüblichen Gabelstaplers im Wesentlichen um eine Anordnung mit standardisierten Abmessungen handelt, ist die erfindungsgemäße zur Hubbegrenzung dienende, verstellbare Anschlaganordnung für fast alle Gabelstaplerarten nachrüstbar. Anderenfalls können auch an die jeweiligen Kolbenstangendurchmesser angepasste Klemmringe/Gewinderinge zur Verfügung gestellt werden.

Die Stirnfläche des Gewinderings, die dem der entsprechenden Kolbenstange zugehörigen Zylinder zugewandt ist, dient als Anschlag an dem z.B. freien Stirnrand des Zylinders. Es ist jedoch auch möglich, dass am Zylinder selbst ein entsprechender Gegenanschlag ausgebildet ist, an dem die entsprechende Stirnfläche des Gewinderings als Hubbegrenzungsanschlag zum Anliegen kommt. Durch Verstellen bzw. Verschrauben des Gewinderings auf dem Klemmring kann die als Anschlag dienende Stirnfläche des Gewinderings relativ zu der freien Stirnfläche des Zylinders bzw. zu dem Gegenanschlag verstellt werden. Dies betrifft zum einen die Grundeinstellung der Hubbegrenzung bei der Neumontage der verstellbaren Anschlaganordnung, wobei auch im Nachhinein bei z.B. weiterem Abnutzen der Räder der Anschlag in die eine Richtung bzw. nach dem Aufziehen neuer Räder der Anschlag in die andere Richtung verstellt werden kann, so dass in letzterem Fall die Gabeln relativ zum Erdboden wieder abgesenkt werden können.

Zum Vermeiden, dass sich die Position des Gewinderings relativ zu dem Klemmring während des Betriebs des Gabelstaplers verändert, beispielsweise hervorgerufen durch Schwingungen aufgrund heftiger Rüttelbewegungen des Gabelstaplers, ist vorzugsweise der Gewindering mittels der zugeordneten Verbindungsvorrichtung mit den Gewindeabschnitten der Ringhälften des Klemmrings verklemmbar.

Gemäß einer Ausgestaltung der Erfindung ist die Verbindungsvorrichtung des Klemmrings und/oder die Verbindungsvorrichtung des Gewinderings jeweils aus einem Spannring gebildet. Dieser Spannring, oder auch Spannbügel, umspannt dabei jeweils die beiden einander zugeordneten Ringhälften. Dabei wird der Spannring in jenem Bereich um die Ringhälften des Klemmrings gelegt, in welchem der Spannring nicht mit dem aufzuschraubenden Gewindering kollidiert, wobei der Spannring des Gewinderings vorzugsweise ferner geeignet ist, den Gewindering mit den Gewindeabschnitten der Ringhälften des Klemmrings zu verklemmen. Es kann an dem Gewindering jedoch beispielsweise auch eine gesonderte Klemmschraube zum Verklemmen bzw. Sichern des Gewinderings an dem Klemmring vorgesehen sein.

Gemäß einer Weiterbildung der Erfindung weisen die Ringhälften des Klemmrings und/oder die Ringhälften des Gewinderings jeweils an ihrem dem zugehörigen Zylinder abgewandten Endabschnitt Flanschabschnitte auf, an denen die jeweiligen Verbindungsmittel angeordnet sind.

Gemäß einer weiteren Ausgestaltung der Erfindung sind die jeweiligen beiden einander zugeordneten Ringhälften mittels wenigstens einer die Verbindungsvorrichtung bildenden Schraube verbindbar, welche sich vorzugsweise durch zwei einander zugeordnete Flanschabschnitte der Ringhälften erstreckt. Hierbei ist es möglich, an der einen Seite der Ringhälften nur eine Verbindungsschraube vorzusehen, wohingegen an der der Verbindungsschraube diametral abgewandten Seite der Ringhälften eine Scharnieranordnung ausgebildet sein kann, von der die Ringhälften schwenkbar miteinander verbunden sind oder lösbar miteinander verhakt werden können. Es können jedoch auch zwei Verbindungsschrauben an den einander diametral abgewandten Seiten des jeweiligen Rings vorgesehen sein.

Die Verbindungsschraube des Gewinderings und/oder des Klemmrings kann ein Schraubbolzen sein, der sich durch ein Loch im Flanschabschnitt der einen Ringhälfte erstreckt und in eine Gewindebohrung des Flanschabschnitts der anderen Ringhälfte einschraubbar ist.

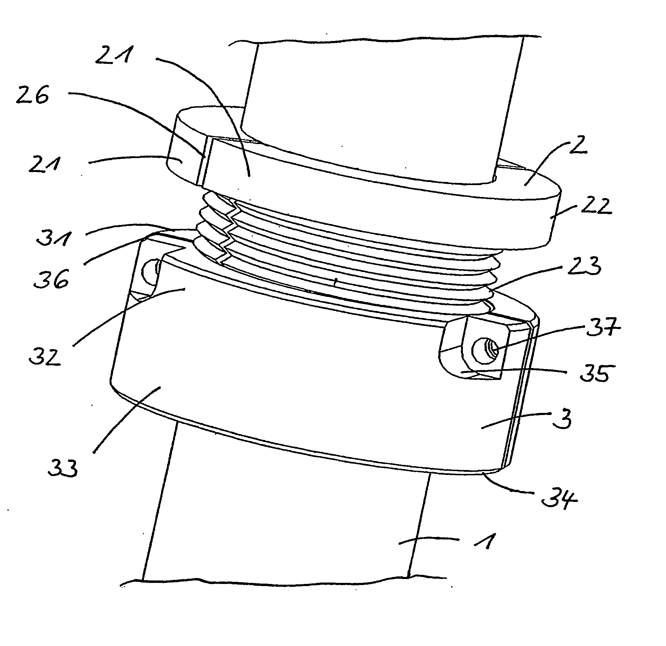

Anhand der Zeichnung, in der eine erfindungsgemäße Anschlaganordnung schematisch dargestellt ist, wird die Erfindung beispielgebend beschrieben.

In der Zeichnung ist eine Kolbenstange 1 einer Zylinder-Kolben-Einheit dargestellt, auf der ein erfindungsgemäßer Klemmring 2 festgeklemmt ist, wobei der Klemmring 2 in zwei Ringhälften 21 diametral geteilt ist. Die beiden Ringhälften 21 des Klemmrings 2 werden radial an die an sich frei zugängliche Kolbenstange 1 der Zylinder-Kolben-Einheit angesetzt bzw. angelegt und mittels einer Verbindungsvorrichtung, die an einem Beispiel einer Verbindungsvorrichtung für den Gewindering 3 näher erläutert wird, in der gewünschten Position an der Kolbenstange 1 festgeklemmt. Die beiden Ringhälften 21 weisen jeweils einen Gewindeabschnitt 23 und einen Flanschabschnitt 22 auf. Um die Ringhälften 21 des Klemmrings 2 an der Kolbenstange 1 festklemmen zu können, ist zwischen den beiden Ringhälften 21 zumindest ein Klemmspalt 26 ausgebildet, welcher dadurch gebildet werden kann, dass zumindest eine der beiden Ringhälften 21 im Querschnitt einen Ringsektor beschreibt, der sich etwas weniger als 180° erstreckt, welcher jedoch dann, wenn der Klemmring 2 an der Kolbenstange 1 festgeklemmt ist, nur noch sehr klein ist.

Auf den Gewindeabschnitt 23 des Klemmrings 2 ist ein Gewindering 3 aufgeschraubt, welcher ebenso wie der Klemmring 2, in zwei Ringhälften 31 diametral geteilt ist, wobei die Ringhälften 31 an ihren dem Klemmring 2 zugewandten Innenseiten jeweils mit Innengewinde versehen sind. Die Ringhälften 31 des Gewinderings 3 sind mittels einer Verbindungsvorrichtung 35, 37 derart miteinander verbunden, dass der Gewindering 3 auf die Gewindeabschnitte 23 der Ringhälften 21 des Klemmrings 2 aufschraubbar ist, wobei gemäß dieser Ausführungsform zwischen den beiden Ringhälften 31 des Gewinderings 3 in diesem Schraubzustand zumindest ein schmaler Klemmspalt 36 ausgebildet ist. Um die Anschlageinstellung beizubehalten und ein selbstständiges Verstellen des Gewinderings 3 zu vermeiden, das bedeutet, dass dann, wenn der Gewindering 3 so weit bzw. hoch auf den Klemmring 2 aufgeschraubt ist, dass die als Anschlag an dem Zylinder dienende freie untere Stirnfläche 34 des Gewinderings 3 in der erforderlichen Anschlageinstellung ist, kann der Gewindering 3 mittels der Verbindungsvorrichtung 35, 37 mit den Gewindeabschnitten 22 der Ringhälften 21 des Klemmrings 2 unter Überwindung oder zumindest Verringerung des Klemmspalts 36 verklemmt werden. Das Verklemmen des Gewinderings 3 mit dem Klemmring 2 kann jedoch zusätzlich oder alternativ auch mittels einer sich radial durch den Gewindering erstreckenden Stellschraube (nicht dargestellt) bewerkstelligt werden, die zum Verklemmen soweit eingeschraubt wird, dass deren auf den Klemmring 2 gerichtetes Ende an dem Klemmring 2 angreift. Jedoch kann durch ein Anklemmen des Gewinderings 3 auf den Klemmring 2 der zusätzliche Vorteil erzielt werden, die Ringhälften 21 auch des Klemmrings 2 im Bereich der Gewindeabschnitte 23 weiter zusammenzuklemmen und dadurch die wirksame Klemmfläche zwischen Klemmring 2 und Kolbenstange 1 zu vergrößern.

Die beiden Ringhälften 31 des Gewinderings 3 weisen jeweils einen Flanschabschnitt 32 auf, wobei bei dieser Ausführungsform die Flanschabschnitte 32 jeweils entlang des oberen Endabschnitts der jeweiligen Ringhälfte 31 verlaufen und Bestandteile der Verbindungsvorrichtung des Gewinderings 3, nämlich ein Loch 35 und ein Gewindeloch 37, aufweisen.

Die Verbindungsvorrichtung des Gewinderings 3 gemäß der dargestellten Ausführungsform kann ebenfalls einen Schraubbolzen (nicht dargestellt) aufweisen, der sich durch das Loch 35 im Flanschabschnitt 32 der einen Ringhälfte 31 erstreckt und in die Gewindebohrung 37 des daran angrenzenden Flanschabschnitts 32 der anderen Ringhälfte 31 eingeschraubt ist. Vorzugsweise ist an der anderen Seite der beiden aneinander angrenzenden Flanschabschnitte 32 der Ringhälften 31 eine dem beschriebenen Beispiel entsprechend ausgebildete Verbindungsvorrichtung mit einem Schraubbolzen vorgesehen. Die Gewindebohrung 37 kann jedoch auch als Durchgangsloch ausgebildet sein, durch das sich der Schraubbolzen hindurch erstreckt, auf welchen zum Verbinden der beiden Ringhälften. 31 eine Mutter aufgeschraubt wird. Es ist auch möglich, anstelle der umlaufenden Flanschabschnitte 22 bzw. 32 in jenen Bereichen, in welchen die beiden zugeordneten Ringhälften zumindest annähernd aneinander angrenzen, sich radial erstreckende ohrenförmige Vorsprünge vorzusehen, welche das Loch bzw. die Gewindebohrung aufweisen. Ferner kann jedoch an einer der beiden Abschnitte, die die Verbindungsvorrichtung aufweisen, eine anders gestaltete Verbindungsvorrichtung angeordnet sein, die beispielsweise ähnlich einer Klemmschellenverbindung einen Haken bzw. eine Öse aufweisen, in welche der Haken eingereift, während die gegenüberliegende Verbindungsvorrichtung mittels der Schraubbolzen-Anordnung ausgebildet ist, mittels welcher letztendlich das Festklemmen des Klemmrings 2 an der Kolbenstange 1 bewirkt wird. Anstatt dieser Schraubbolzen-Anordnung kann aber auch eine Schnellspannvorrichtung angeordnet sein.

Die Verbindungsvorrichtung des Klemmrings 2, die in der Figur nicht dargestellt ist, kann so wie eine der aufgezeigten Verbindungsvorrichtungen für den Gewindering 3 ausgebildet sein. Insbesondere kann die Verbindungsvorrichtung für den Klemmring 2 als Spannring ausgebildet sein, der sich beispielsweise im Bereich der in der Figur dargestellten Flanschabschnitte 22 um die beiden einander zugeordneten Ringhälften 21 erstreckt und die beiden Ringhälften 21 an der Kolbenstange 1 festklemmen.

## Patentansprüche

1. Zur Hubbegrenzung dienende verstellbare Anschlaganordnung für eine Kolben-Zylinder-Einheit mit einem Zylinder und einem Kolben, der eine Kolbenstange aufweist, insbesondere zur Hubbegrenzung einer Hebevorrichtung an einem Gabelstapler, mit einem auf der Kolbenstange axial verschiebbaren und an der Kolbenstange klemmend festlegbaren Klemmring, der in einem Bereich seines Außenumfangs einen Gewindeabschnitt aufweist, und mit einem auf dem Gewindeabschnitt des Klemmrings schraubbaren Gewindering, dessen dem Zylinder zugewandter Stirnrand als Anschlag an dem Zylinder dient, **dadurch gekennzeichnet, dass** der Klemmring (2) und der Gewindering (3) jeweils in zwei Ringhälften (21 bzw. 31) diametral geteilt sind, wobei die beiden Ringhälften (21) des Klemmrings (2) mittels einer Verbindungsvorrichtung miteinander verbindbar und an der Kolbenstange (1) festklemmbar sind, und die beiden Ringhälften (31) des Gewinderings (3) mittels einer weiteren Verbindungsvorrichtung (35, 37) derart miteinander verbindbar sind, dass der Gewindering (3) auf die Gewindeabschnitte (23) der Ringhälften (21) des Klemmrings (2) aufschraubbar ist.

2. Anschlaganordnung gemäß Anspruch 1, wobei der Gewindering (3) mittels der zugeordneten Verbindungsvorrichtung (35, 37) mit den Gewindeabschnitten (23) der Ringhälften (21) des Klemmrings (2) verklemmbar ist.

3. Anschlaganordnung gemäß Anspruch 1 oder 2, wobei die Verbindungsvorrichtung des Klemmrings (2) aus einem Spannring gebildet wird.

4. Anschlaganordnung gemäß einem der Ansprüche 1 bis 3, wobei die Verbindungsvorrichtung des Gewinderings (3) aus einem Spannring gebildet wird.

5. Anschlaganordnung gemäß einem der Ansprüche 1 bis 4, wobei die Ringhälften (21) des Klemmrings (2) und die Ringhälften (31) des Gewinderings (3) jeweils an ihrem dem zugehörigen Zylinder abgewandten Endabschnitt Flanschabschnitte (22 bzw. 32) aufweisen, an denen die jeweilige Verbindungsvorrichtung angeordnet ist.

6. Anschlaganordnung gemäß Anspruch 5, wobei zwei einander zugeordnete Ringhälften (21 bzw. 31) mittels wenigstens einer Schraube verbindbar sind, welche sich durch zwei einander zugeordnete Flanschabschnitte (22 bzw. 32) der Ringhälften (21 bzw. 31) erstreckt.

7. Anschlaganordnung gemäß Anspruch 5 oder 6, wobei die Verbindungsvorrichtung des Gewinderings (3) einen Schraubbolzen aufweist, der sich durch ein Loch (35) im Flanschabschnitt (32) der einen Ringhälfte (31) erstreckt und in eine Gewindebohrung (37) des Flanschabschnitts (32) der anderen Ringhälfte (32) einschraubbar ist.

## Claims

1. Adjustable stop assembly used for stroke limitation for a piston-cylinder-unit having a cylinder and a piston, which has a piston rod, in particular for the stroke limitation of a lifting apparatus on a forklift truck, having a clamping ring, which is axially displaceable on the piston rod and can be fixed in clamping fashion on the piston rod and which has a threaded section in a region of its outer circumference, and having a threaded ring, which can be screwed onto the threaded section of the clamping ring and whose front edge facing the cylinder is used as a stop on the cylinder, **characterized in that** the clamping ring (2) and the threaded ring (3) are each split diametrically into two ring halves (21 and 31, respectively), the two ring halves (21) of the clamping ring (2) being capable of being connected to one another by means of a connection apparatus and of being fixedly clamped on the piston rod (1), and the two ring halves (31) of the threaded ring (3) being capable of being connected to one another by means of a further connection apparatus (35, 37) such that the threaded ring (3) can be screwed onto the threaded sections (23) of the ring halves (21) of the clamping ring (2).

2. Stop assembly according to claim 1, the threaded ring (3) being capable of being clamped to the threaded sections (23) of the ring halves (21) of the clamping ring (2) by means of the associated connection apparatus (35, 37).

3. Stop assembly according to claim 1 or 2, the connection apparatus of the clamping ring (2) being formed by a tensioning ring.

4. Stop assembly according to one of claims 1 to 3, the connection apparatus of the threaded ring (3) being formed from a tensioning ring.

5. Stop assembly according to one of claims 1 to 4, the ring halves (21) of the clamping ring (2) and the ring halves (31) of the threaded ring (3) each having flange sections (22 and 32, respectively) on their end section facing away from the associated cylinder, the respective connection apparatus being arranged on said flange sections.

6. Stop assembly according to claim 5, two mutually associated ring halves (21 or 31) being capable of being connected by means of at least one screw, which extends through two mutually associated flange sections (22 or 32) of the ring halves (21 or 31).

7. Stop assembly according to claim 5 or 6, the connection apparatus of the threaded ring (3) having a bolt, which extends through a hole (35) in the flange section (32) of one ring half (31) and is capable of being screwed into a threaded drilled hole (37) in the flange section (32) of the other ring half (32).

## Revendications

1. Ensemble de butée réglable servant à limiter la course pour une unité piston-cylindre avec un cylindre et un piston, lequel piston présente une tige de piston, en particulier pour limiter la course d'un dispositif de levage sur un chariot élévateur à fourche, avec une bague de serrage qui peut être déplacée axialement sur la tige de piston et qui peut être fixée par serrage sur la tige de piston, cette bague présentant un segment fileté dans une zone de son périmètre extérieur, et avec une bague filetée pouvant être vissée sur le segment fileté de la bague de serrage, le bord d'attaque de la bague filetée tourné vers le cylindre servant de butée au niveau du cylindre, **caractérisé en ce que** la bague de serrage (2) et la bague filetée (3) sont respectivement divisées diamétralement en deux moitiés de bagues (respectivement 21 et 31), les deux moitiés de bague (21) de la bague filetée (2) pouvant être reliées l'une à l'autre au moyen d'un dispositif de liaison et pouvant être serrées sur la tige de piston (1), et les deux moitiés de bague (31) de la bague filetée (3) pouvant être reliées l'une à l'autre au moyen d'un autre dispositif de liaison (35, 37) de telle manière que la bague filetée (3) puisse être vissée sur les segments filetés (23) des moitiés de bague (21) de la bague de serrage (2).

2. Ensemble de butée selon la revendication 1, la bague filetée (3) pouvant être bloquée au moyen du dispositif de liaison associé (35, 37) avec les segments filetés (23) des moitiés de bague (21) de la bague de serrage (2).

3. Ensemble de butée selon la revendication 1 ou 2, le dispositif de liaison de la bague de serrage (2) étant réalisé sous forme d'un collier tendeur.

4. Ensemble de butée selon l'une quelconque des revendications 1 à 3, le dispositif de liaison de la bague filetée (3) étant réalisé sous forme d'un collier tendeur.

5. Ensemble de butée selon l'une des revendications 1 à 4, les moitiés de bague (21) de la bague de serrage (2) et les moitiés de bague (31) de la bague filetée (3) présentant respectivement sur leur segment d'extrémité opposé au cylindre associé, des segments de bride (respectivement 22 et 23), au niveau desquels est disposé le dispositif de liaison respectif.

6. Ensemble de butée selon la revendication 5, deux moitiés de bague associées (respectivement 21 et 31) pouvant être reliées au moyen d'au moins d'une vis, laquelle s'étend à travers deux segments de brides associés (respectivement 22 et 32) des moitiés de bague (respectivement 21 et 31).

7. Ensemble de butée selon la revendication 5 ou 6, le dispositif de liaison de la bague filetée (3) présentant un boulon fileté, qui s'étend à travers un trou (35) dans le segment de bride (32) d'une moitié de bague (31) et qui peut être vissé dans un alésage fileté (37) du segment de bride (32) de l'autre moitié de bague (32).
